# EUROPEAN PATENT SPECIFICATION

(11) **EP 3 650 367 B1**
(45) Date of publication and mention of the grant of the patent: **20.08.2025**
(21) Application number: 18827792.5
(22) Date of filing: 26.06.2018
(51) Int. Cl.: B65D 33/01, F16K 15/14

(54) **CLOSING VALVE MADE OF A SHEET AND BAG THEREWITH**
SCHLIESSVENTIL AUS EINER FOLIE UND BEUTEL DAMIT
SOUPAPE DE FERMETURE CONSTITUÉE D'UNE FEUILLE ET SAC AVEC UNE TEL SOUPAPE DE FERMETURE

(30) Priority: 04.07.2017 JP 2017131543; 27.04.2018 JP 2018087683
(43) Date of publication of application: 13.05.2020
(73) Proprietor: Kashiwara Seitai Co., Ltd, Kashiwara-shi Osaka 582-0017 (JP)
(72) Inventor: KOYANAGI Yoshihumi, Kashiwara-shi Osaka 582-0017 (JP)
(74) Representative: Marks & Clerk LLP
(86) International application number: PCT/JP2018/024144
(87) International publication number: WO 2019/009139

(56) References cited:
- EP-A2- 1 306 115
- JP-A- 2012 126 404
- JP-A- 2012 254 828
- JP-A- H07 309 351
- JP-A- H09 112 721
- JP-U- H0 542 147
- JP-U- S6 367 443
- JP-Y2- H0 314 614
- US-A1- 2010 038 275

## Description

### Technical Field

The present invention relates to a closing valve made of a sheet and a bag provided with a closing valve made of a sheet, such as a deaerating bag for food.

### Background Art

Flexible resin bags are widely used to contain food and other items. In particular, articles that are averse to coming into contact with the outside air are generally contained in resin sealed bags that can block the outside air. Further, as a cushioning material used for packaging, a bag body made of resin is used in which air or other gas is filled into the bag, that is, the bag body contains the gas and serves as a cushion. In addition, deaerating bags, which contain clothes and futon bedding and discharge the air in the bag to reduce the volume and not to take space for storage, have also become popular.

Some of the contained items, not only a gas and a liquid but also even a solid, may generate a gas during containment, such as fermented food.

A kind of the sealed bag that is provided with a closing valve through which a contained fluid item is taken out or unnecessary gas is discharged without allowing outside air to enter the bag is commonly used.

For example, Patent Literature 1 described a check valve (V), including an exterior film (1) made of a flexible resin sheet and having flexibility and a valve body sheet (2), wherein: the check valve has a substantially cylindrical shape with a flat cross section due to formation of a side seal (3) in which both sides of exterior films (1a, 1b) facing each other are bonded together; a fluid passage (P) is provided inside; the at least one valve body sheet (2) is provided so as to be sandwiched between the exterior films (1a, 1b) facing each other; a bond portion (21a), which is a part of an attachment surface (21) that is a surface on one side of the valve body sheet (2), is bonded to the exterior film (1a) on one side; a close-contact surface (22) that is a surface on the other side of the valve body sheet (2) is capable of getting close to and away from the exterior film (1b) on the other side facing the close-contact surface (22) or a valve body sheet (2') bonded to the exterior film (1b) on the other side; and the fluid passage (P) is closed by the close-contact surface (22) coming into close contact with each of the sheets (1b, 2') facing the close-contact surface (22), wherein: handle portions (4) having higher rigidity than that of each of the exterior films (1) are formed on both sides across the fluid passage (P) of an operation side opening portion (P2), which is one side of opening portions (P1, P2), which are both ends of the fluid passage (P); and the fluid passage (P) can be forcibly opened by bringing the handle portions (4) on both sides across the operation side opening portion (P2) close to each other in a direction along the exterior film (1).

The invention described in Patent Literature 1 is to provide a check valve in which a fluid passage can be forcibly opened by bringing the handle portions on both sides across the operation side opening portion close to each other in a direction along the exterior film, allowing the fluid passage to be opened simply with hand and allowing a fluid to easily and quickly pass through, and the check valve in which unexpected fluid leakage is less likely to occur while an appearance is not affected.

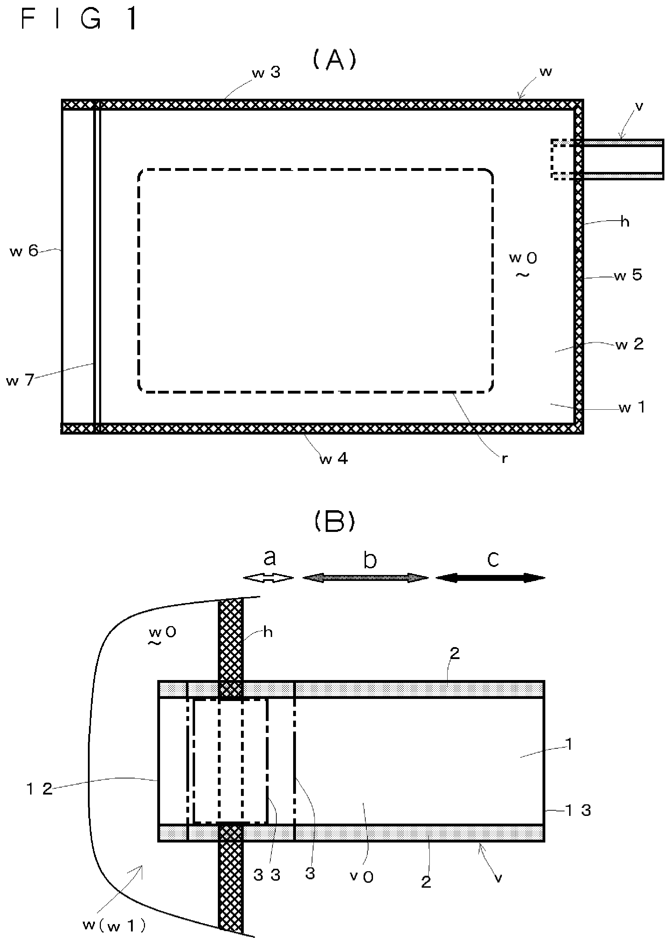

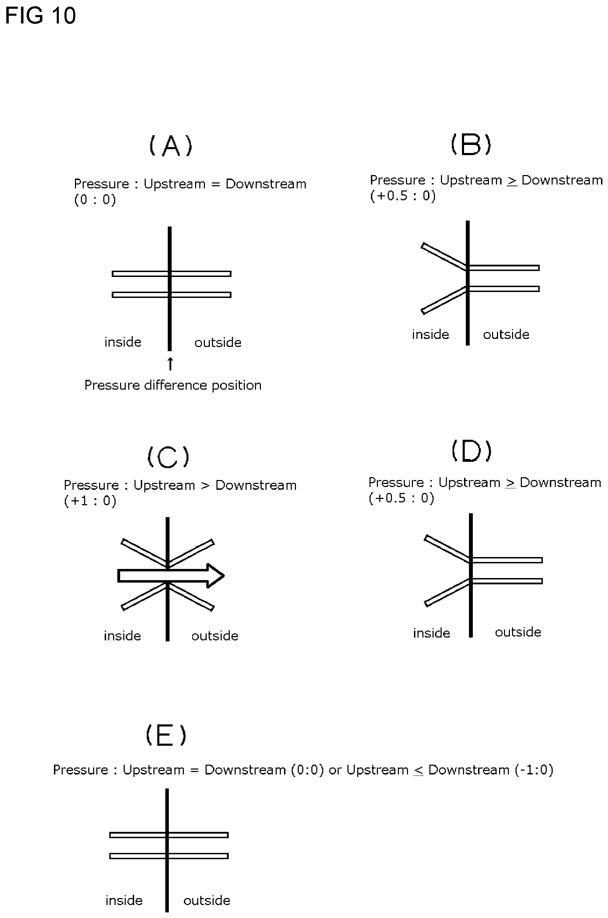

An image of the operation of a conventional check valve provided in a flexible resin bag (FIG. 1(A)) will be briefly described with reference to FIG. 10 with an example where the increasing pressure in the bag varies, with reference to the atmospheric pressure assumed to be 0.

In FIG. 10, the indication "inside" means an inside of a containment space of the bag, that is, the inside of the bag, and the indication "outside" means an outside of the bag, that is, an atmosphere side. As illustrated, in deaerating, the "inside" is an upstream side, and the "outside" is a downstream side. In FIGS. 10(A) to 10(E), the thick lines that extend longitudinally at the center and divide the "inside" from the "outside" are pressure difference positions between the internal pressure of the bag and the outside of the bag and indicate valve mounting positions such as bag end portions.

From the state of FIG. 10(A) in which the internal pressure of the bag and the external pressure are balanced, through the state of FIG. 10(B) in which the internal pressure of the bag has become higher than the external pressure (e.g., +0.5 atmospheres of internal pressure with respect to external pressure of 0), and then, in the state of FIG. 10(C) in which the internal pressure has become further higher than the external pressure (e.g., +1 atmosphere of internal pressure with respect to external pressure of 0), the gas in the bag is discharged, that is, deaerated from the deaerating valve. Through the state of FIG. 10(D) (e.g., +0.5 atmospheres of internal pressure with respect to external pressure of 0) in which the difference between the internal pressure of the bag and the external pressure is reduced by the deaeration to a ratio similar to that of FIG. 10(B) again, and then it becomes the state of FIG. 10(E) in which the internal pressure of the bag and the external pressure are balanced again or the internal pressure of the bag is slightly lower than the external pressure. In the state of FIG. 10(E), the valve (valve body) closes the air passage by self-adhesion of the sheet, that is, film.

As shown in FIG. 10, the conventional check valve also has a sufficient function as an air-filled bag such as a cushioning material (air cushion material) or a deaerating bag such as a clothing compression bag.

However, the conventional check valve has been assumed to be in a state where a large pressure fluctuation occurs when the check valve is opened or closed. The following two points have been taken into consideration in the development of the check valve when this large pressure fluctuation is involved.

The first solution is to prevent a reverse flow, and to reliably and quickly close the valve in a reverse flow (when there is a pressure difference in the fluid in the flow path).

The second solution is to maintain for a long time a state in which the reverse flow is prevented.

In order to achieve the above-mentioned solutions, it has also been proposed to provide a valve body at two locations in the air passage of the check valve, that is, upstream and downstream.

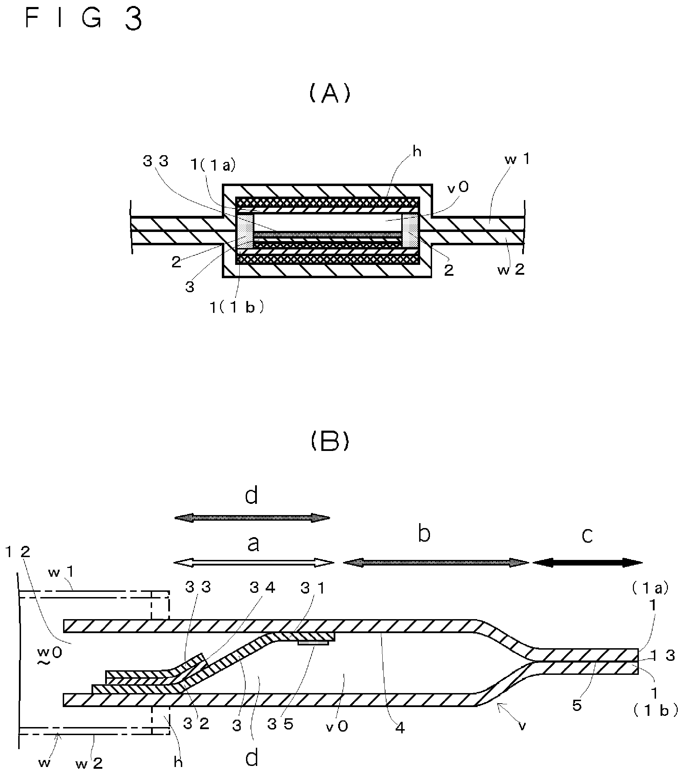

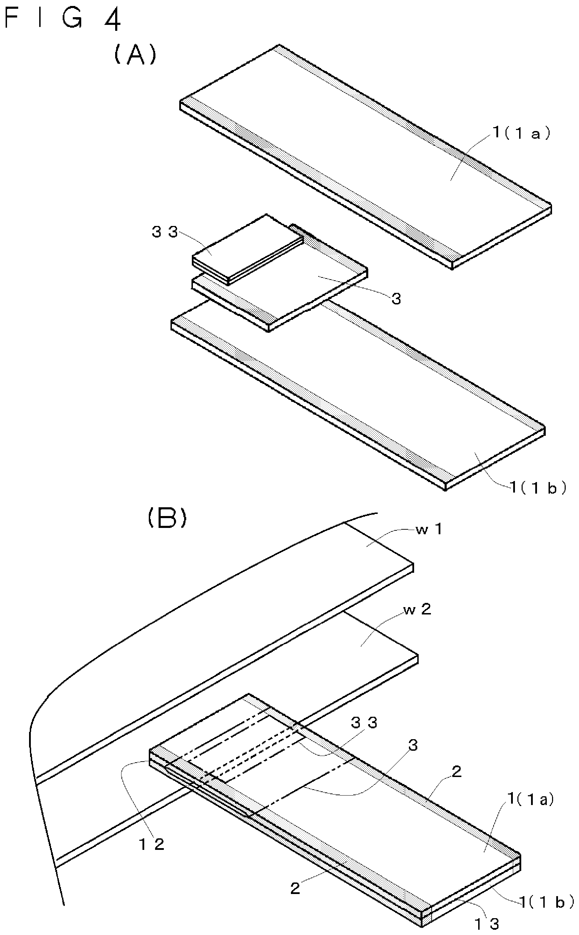

For example, Patent Literature 2 describes a closing valve in which a substantially cylindrical air passage (41) having a flat cross section is formed by providing both sides of exterior films (43a) (43b) facing each other as closed portions (43e) (43f); opening portions (43c) (43g) are formed on both end sides of the air passage (41); and a valve body sheet (42) is provided inside, wherein: the valve body sheet (42) includes a fixing portion (42a) attached to the exterior film (43b), and a first flap portion (42b) and a second flap portion (42c) movable around the fixing portion (42a); the first flap portion (42b) is in close contact with a surface (43i) of the other exterior film (43a) on the air passage side, whereby air flow from one end side to the other end side of the air passage (41) is blocked; and the second flap portion (42c) is in close contact with the surface (43i) of the other exterior film (43a) on the air passage side, whereby air flow from the other end side to one end side of the air passage (41) is blocked, wherein: FIGS. 3 and 4 show the closing valve that includes two valve portions of an upstream valve portion and a downstream valve portion.

In addition, Patent Literatures 3 and 4 also describe closing valves each including two valve portions of an upstream valve portion and a downstream valve portion.

These patent literatures describe a check valve including two valve portions, and suggest, as a first solution, providing another valve portion because only one valve portion is not sufficient in order to ensure a quick exertion of a function of preventing a reverse flow and to maintain for a long time a state of preventing a reverse flow, in order to achieve the first and second solutions described above.

In recent years, however, there has been a demand for the development of a check valve that can cope with not only large pressure fluctuations but also small pressure fluctuations. In the development of a check valve that copes also with such a small pressure fluctuation, a new problem has emerged that cannot be solved by the above-described conventional solutions.

This new problem relates to the behavior of the valve in balanced state with a very small pressure difference.

Specifically, the inventor has found that there is a problem that a small amount of fluid (air in case of a deaerating bag) near the valve outlet is sucked in when the state changes from the state of FIG. 10(C) to the state of FIG. 10(D), and further to the state of FIG. 10(E). In particular, when the balanced state (upstream ≒ downstream) with a very small pressure difference continues for a long time, the valve outlet cannot be closed by the self-adhesion of the valve portion alone, which increases the possibility that the valve cannot be closed.

In the case of a compression bag or the like to which a conventional check valve has been applied, the bag can be forcibly pressurized, or in the case of an air-filled bag, the pressure in the bag can be quickly increased by injecting air through a nozzle or the like, and hence a relatively large pressure difference can be ensured and the time of balanced state can be shortened.

On the other hand, in the case where the contents generate gas and in the case where the contents have a pressure difference generated by the generated gas such as coffee beans, if the content amount (coffee beans) is small, the amount of gas generated is also small, and the balanced state may become long.

Further valve devices are disclosed in Patent Literatures 5 and 6

### Prior Art Document

### Patent Literatures

Patent Literature 1: JP 2005-219766 A
Patent Literature 2: JP 3502845 B
Patent Literature 3: JP H5-42034 Y
Patent Literature 4: JP H2-45373 A
Patent Literature 5: JP H09 112721 A
Patent Literature 6: JP 2012 126404

### Summary of Invention

### Problems to be Solved by the Invention

An object of the present invention is to provide a closing valve capable of effectively exerting the function of a check valve when the pressure difference is large and also even when the balanced state where the pressure difference is small continues for a long time.

### Means for Solving the Problems

The present invention provides a closing valve as defined in claim 1 as appended hereto having a flexible and substantially cylindrical shape and made of a sheet, in which: exterior films are arranged above and below in an outside and both sides of the exterior film are closed to form closed portions; one end side serves as an inflow portion to a forward flow, and the other end side serves as an outflow portion to the forward flow; a flow path for the forward flow and a reverse flow flowing in an opposite direction of the forward flow is composed; and the flow path includes a valve portion that restricts movement of a fluid in the flow path, wherein: three regions of an upstream valve portion, a downstream valve portion, and a buffer portion are included.

The downstream valve portion is positioned downstream of the upstream valve portion relative to the forward flow's direction of flow. Between the upstream valve portion and the downstream valve portion, the buffer portion in which a fluid in the flow path is retained is formed.

In order to retain a fluid in the buffer portion, the following configuration is adopted.

First, closedness of the flow path in the buffer portion is lower than closedness of the downstream valve portion.

Second, in some embodiments, closedness of the flow path in the upstream valve portion is lower than the closedness of the downstream valve portion.

Instead of or in addition to the second configuration, third, in the buffer portion, a length in a flow direction of the fluid in the flow path is longer than a length of at least any one of the upstream valve portion and the downstream valve portion.

At least any one of the upper and lower exterior films in the buffer portion includes a hardly pressure-sensitive adhesion portion, and due to the hardly pressure-sensitive adhesion portion, a space between the upper and lower exterior films in the buffer portion of a hardly adhesive property as compared to a space between the upper and lower exterior films in an external valve portion.

In carrying out the present invention, at least the upstream valve portion of the valve portions includes, as a valve body film, at least one film composing a check valve that is opened in the forward flow and closed in the reverse flow. The valve body film opens or closes the flow path by opening or coming into close contact with a film overlapped on an upper surface of the valve body film, and the valve body film is fixed to a film overlapped on a lower surface of the valve body film in a sealed state on an upstream side of the valve body film, and is conducted to the buffer portion on the downstream side of the valve body film so that the valve body film and the film overlapped on the lower surface of the valve body film compose a buffer portion continuation.

The valve body film is not provided in the downstream valve portion. A tip space is arranged between a downstream end of the valve body film and a downstream end of the exterior film, and the tip space is a space in which the upper and lower exterior films directly face each other, and includes a lowly closed space composing the buffer portion and a highly closed space positioned on a downstream side of the buffer portion and composing the downstream valve portion.

The closedness of the flow path is greatly influenced by the width of the flow path and the adhesion between the films composing the flow path. Therefore, as specific means, the flow path width of the flow path can be made narrower in the downstream valve portion than a flow path width in the buffer portion and a flow path width in the upstream valve portion.

The adhesion between the films is made lower in the buffer portion than adhesion in the upstream valve portion and adhesion in the downstream valve portion.

The closing valve according to the present invention can be mounted on a bag when used. Specifically, the present invention provides a bag and the closing valve fixed to a sheet that composes a containment space of the bag, wherein: the upstream valve portion includes an upstream valve film, the upstream valve film is a check valve that includes a fixing portion fixed to one of the exterior films and a flap portion that extends from the fixing portion toward the outflow portion; and the fixing portion is arranged, in a flow direction of the forward flow, at the same position as, or downstream of, a pressure difference position, which is a sealed portion of the bag that divides inside and outside of the containment space by sealing the sheets, which compose the bag, to each other.

Note that in the present invention, the upper and lower positions only indicate the relative positional relationship, and do not specify the absolute position. Specifically, the closing valve is to be attached to the bag in various orientations, and the bag itself is to be used in various orientations. Whatever satisfies the relative positional relationship defined by the present invention, no matter which orientation it is used, should be considered as an embodiment of the present invention.

### Advantageous Effects of Invention

The present invention is capable of providing a closing valve that is capable of effectively exerting the function of a check valve not only when the pressure difference is large but also when the pressure difference is small and the balanced state continues for a long time, and a bag that includes the closing valve.

### Brief Description of Drawings

FIG. 1(A) is an overall plan view of a bag to which a closing valve according to a first embodiment is attached, and FIG. 1(B) is an enlarged plan view of the closing valve.
FIG. 2(A) is a perspective view of the closing valve, and FIG. 2(B) is a schematic vertical sectional view of the closing valve.
FIG. 3(A) is a sectional view taken along line x-x in FIG. 2(B), and FIG. 3(B) is a schematic vertical sectional view showing an operating state of the closing valve.
FIG. 4(A) is an exploded perspective view of the closing valve, and FIG. 4(B) is a schematic perspective view showing a process of providing the closing valve of FIG. 4(A) to a bag.
FIGS. 5(A) to 5(F) are explanatory views each showing the operation of the closing valve.
FIG. 6(A) is an overall plan view showing a modification of a sealed bag of FIG. 1(A), and FIG. 6(B) is an enlarged plan view showing a modification of a closing valve provided in the sealed bag.
FIG. 7(A) is a schematic vertical sectional view showing a closing valve according to a second embodiment, and FIG. 7(B) is a schematic vertical sectional view showing a third embodiment.
FIG. 8(A) is an exploded perspective view of a closing valve according to the third embodiment, and FIG. 8(B) is a plan view showing a state in which the closing valve is attached to a bag after completion.
FIG. 9(A) is a sectional view of a closing valve according to a fourth example - not in accordance with the present invention, FIG. 9(B) is a plan view of the closing valve, FIG. 9(C) is a plan view showing a modification of the closing valve, FIG. 9(D) is a plan view showing another modification of the closing valve, and FIG. 9(E) is a sectional view of the same.
FIGS. 10(A) to 10(E) are perspective views each showing the operation of a conventional closing valve.

### Embodiments for Carrying Out the Invention

Hereinafter, embodiments of the present invention will be described with reference to the drawings.

In this example, a sealed bag w that includes a closing valve v according to the present invention as a deaerating valve will be described. An overall view (plan view) is illustrated in FIG. 1(A), in particular, with a food storage bag provided with the deaerating valve as the sealed bag w. FIG. 1(B) is an enlarged plan view of the closing valve v according to the present invention provided in the sealed bag w of FIG. 1(A).

### (Sealed bag w)

The bag for food is the flexible resin sealed bag w.

As shown in FIG. 1(A), in this example, the sealed bag w is formed by overlapping two sheets of a substantially rectangular upper sheet w1 and lower sheet w2 and sealing three sides w3, w4, and w5 of the rectangle to close. The upper sheet w1 and the lower sheet w2 are sheets formed of a flexible synthetic resin such as polyethylene. The hatched portions in FIGS. 1(A) and 1(B) are a sealed portion h to which the seal is applied. The sealed portion h can be formed by heat sealing.

In the above, a remaining one side w6, which is opened without being closed, is an opening portion (hereinafter, referred to as an opening portion w6 as necessary) of the sealed bag w, and a fastener w7 is provided. As the fastener w7, a well-known one used for closing a synthetic resin bag opening portion may be adopted. For example, in this example, the fastener w7 is composed of concave and convex portions provided over substantially the entire length of one side that is the opening portion w6, and the opening portion is closed by fitting the concave and convex portions together so as to be openable and closable.

The sealed bag w is not limited to the substantially rectangular one shown in FIG. 1(A), and the shape and dimension of the sealed bag w are not particularly limited. For example, it may be implemented as a polygon other than a quadrangle, a circle, or other streamline shape.

The closing valve v, which is the deaerating valve, is provided on one of the three closed sides of the sealed bag w.

Before the heat sealing of the upper sheet w1 and the lower sheet w2, the heat sealing is performed by sandwiching the closing valve v between the sides of the upper sheet w1 and the lower sheet w2, whereby the closing valve v can be attached to the sealed bag w.

In this example, the sealed bag w is a deaerating bag in which, for example, food that generates a gas during storage such as coffee or fermented food, clothes or futon bedding whose bulk is reduced by depressurization, or the like is contained in an interior space, that is, a containment space w0, of the sealed bag w. After the heat sealing, this contained item is contained in the containment space w0 through the opening portion w6 by opening the fastener w7.

In addition to the above, the heat sealing may be performed after the contained item is arranged between the upper sheet w1 and the lower sheet w2 before the heat sealing. In this case, the one side w6 provided with the fastener w7 may also be heat sealed, and the opening portion w6 may be formed in the sealed bag by opening by a user and the opening portion w6 may be closed by the fastener w7 after opened.

With the sealed portion h as a boundary, the containment space w0 side of the sealed bag w is defined as the inside of the bag, and the outside of the containment space w0 is defined as the outside of the bag.

### (Closing valve v)

The closing valve v is a flexible, flat, substantially cylindrical valve, and uses the interior space of the cylindrical closing valve v as a flow path v0 for fluid (air in this example), thereby allowing movement of fluid between the containment space w0 of the sealed bag w and the outside of the sealed bag w. The closing valve v includes an upstream valve portion a and a downstream valve portion c, which restrict the movement of fluid in the flow path v0 (FIG. 1(B)).

In this example in which the closing valve v is a deaerating valve for discharging gas from the inside to the outside of the sealed bag w, the flow path is defined such that the inside of the bag is the upstream side and the outside of the bag is the downstream side. The upstream valve portion a is arranged upstream with respect to the downstream valve portion c. A portion of the closing valve v between the upstream valve portion a on the upstream side and the downstream valve portion c on the downstream side composes a buffer portion b for retaining fluid. In particular, the upstream valve portion a is provided at a pressure difference position between an internal pressure and an external pressure of the sealed bag w. The pressure difference position is, in this example, a position where the closing valve v is mounted in the sealed bag w, and coincides with the sealed portion h.

### (Specific mode of first embodiment)

Specifically, the closing valve v is formed by overlapping two sheets of flexible, synthetic resin exterior films 1 such as polyethylene.

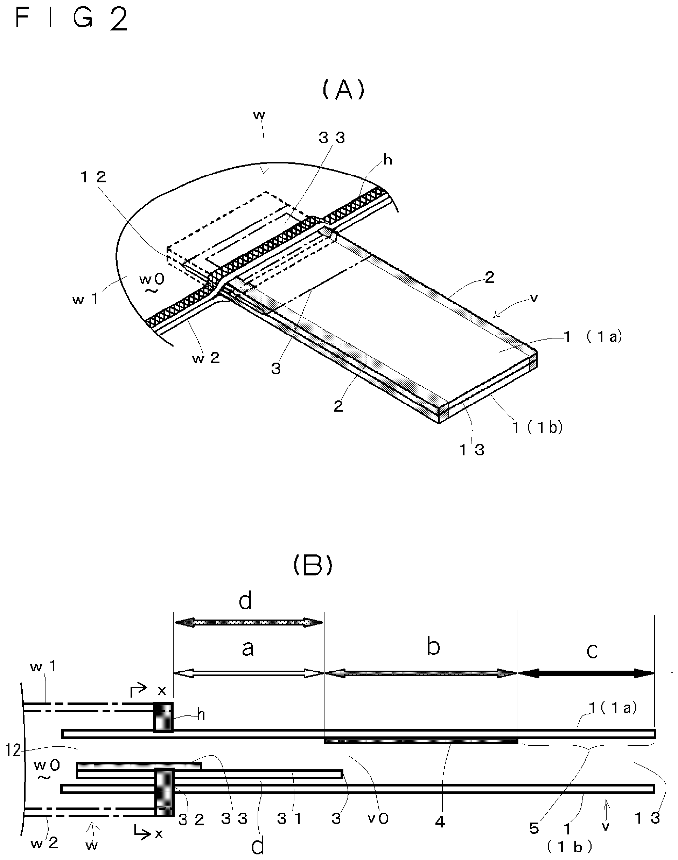

Hereinafter, if necessary, the exterior film 1 arranged above in FIGS. 2(A) and 2(B) is referred to as an upper exterior film 1a, and the exterior film 1 arranged below the upper exterior film 1a is referred to as a lower exterior film 1b.

As shown in FIGS. 1(B) and 2(A), the both sides of the exterior films 1a and 1b, which are overlapped and face each other, are closed portions 2 that are closed. In this example, the closed portion 2 is a portion that is sealed as a side seal (hereinafter referred to as a side seal portion 2). The side seal portion 2 may be formed by well-known means such as heat sealing. With the formation of the side seal portion 2, the overlapped exterior film 1 is formed into a flat cylindrical shape with both ends open. A fluid passage (the flow path v0) is formed between the upper exterior film 1a and the lower exterior film 1b. With respect to the openings at both ends of the exterior film 1, when the closing valve v is attached to the sealed bag w, one end side of the exterior film 1 serves as an inflow portion 12 that opens to the inside of the sealed bag w, and the other end side of the exterior film 1 serves as an outflow portion 13 that opens to the outside of the sealed bag w.

In the present invention, upstream and downstream and inflow and outflow are each based on a flow direction of a forward flow in which the closing valve allows a fluid to pass through unless otherwise noted, and in a case where they are based on a flow direction of a reverse flow in a direction reverse to the flow direction of the forward flow, the same is clearly indicated.

The upstream valve portion a is positioned in a region including the sealed portion h defining the inside of the sealed bag w from the outside thereof, which is the pressure difference position in the flow path v0 as described above.

The upstream valve portion a is a check valve that allows movement of a fluid from the upstream side to the downstream side of the flow path v0, that is, the forward flow, and restricts movement of the fluid from the downstream side to the upstream side, that is, the reverse flow. As shown in FIG. 2(B), the upstream valve portion a includes a valve body film made of synthetic resin such as polyethylene. Hereinafter, the valve body film of the upstream valve portion a is referred to as an upstream valve film 3 where necessary.

The upstream valve film 3 is arranged between the upper exterior film 1a and the lower exterior film 1b, and the upper surface of the upstream valve film 3 is not fixed to the upper exterior film 1a but is released on the upstream side and the downstream side thereof. The lower surface of the upstream valve film 3 is fixed to the lower exterior film 1b in a sealed state on the upstream side thereof, and is released on the downstream side thereof.

More specifically, the upstream valve film 3 has a flap portion 31 that performs open/close operations of the valve and a fixing portion 32 that fixes the flap portion 31 to the lower exterior film 1b.

The upstream valve film 3 moves up and down in response to pressure fluctuations in the flow path v0, and the upper surface of the upstream valve film 3 (flap portion 31) comes into close contact with the lower surface of the upper exterior film 1a to block the flow path v0, and the upper surface of the upstream valve film 3 (flap portion 31) is opened from the lower surface of the upper exterior film 1a to open the flow path v0.

As shown in FIG. 4(A), by forming the side seal portion 2 by sandwiching the upstream valve film 3 between the upper and lower exterior films 1a and 1b before the side seal portion 2 is formed, the upstream valve film 3 can be attached between the exterior films 1 together with the adhesion between the upper and lower exterior films 1a and 1b. In FIG. 4(A), the region where the spots are marked is a portion to be adhered by the side seal portion 2.

A non-welding film 33 to be described later is provided on the upstream valve film 3 before the upstream valve film 3 is attached between the upper and lower exterior films 1.

When the upper sheet w1 and the lower sheet w2 are heat sealed as described above at the time of forming the sealed bag w, the upper exterior film 1a, the upstream valve film 3, and the lower exterior film 1b, which are integrated at the side seal portion 2, are inserted (FIG. 4(B)) between the upper sheet w1 and the lower sheet w2, and performing the heat sealing enables the sealed bag w to be formed, the upstream valve portion a to be formed on the closing valve v, and the closing valve v to be attached to the sealed bag w simultaneously (FIG. 2(A)). That is, the fixing portion 32 of the upstream valve film 3 is formed by the heat sealing of the sealed portion h. Therefore, in the upstream valve film 3, the fixing portion 32 indicates the pressure difference position.

In the state before attachment to the sealed bag w, the fixing portion 32 is not formed, and the upstream valve film 3 is only fixed to the upper and lower exterior films 1 at the side seal portion 2.

When the sealed portion h of the sealed bag w is formed, the fixing portion 32 is formed by the heat sealing. At that time, the non-welding film 33 is arranged on the upper surface of the upstream valve film 3 so that the upper surface of the upstream valve film 3 opposite to the fixing portion 32 is not welded to the upper exterior film 1a by heat sealing of the sealed portion h (FIGS. 1(B), 2, 3, and 4).

The non-welding film 33 is a film that is not heat-welded at the heat sealing temperature of the sealed portion h, and prevents welding with the upper exterior film 1a. The non-welding film 33 itself is fixed to the upstream valve film 3 via a welding film 34 (FIG. 3(B)), which is heat-welded. The welding film 34 is overlapped on the non-welding film 33 by lamination. As a method of lamination, a well-known method other than heat sealing such as using an adhesive is employed.

Instead of the non-welding film 33, a heat-resistant ink can be applied.

As shown by alternate long and short dash line in FIG. 1(B), the non-welding film 33 is provided on the upstream valve film 3 within a range not overlapping the side seal portion 2 so as not to block the sealing by the side seal portion 2. In this example, the non-welding film 33 has a width substantially equal to the distance between the side seal portions 2 (FIGS. 1(B) and 3(A)). However, as long as the sealing by the side seal portion 2 is not blocked, the non-welding film 33 that overlaps the side seal portion 2 is not excluded.

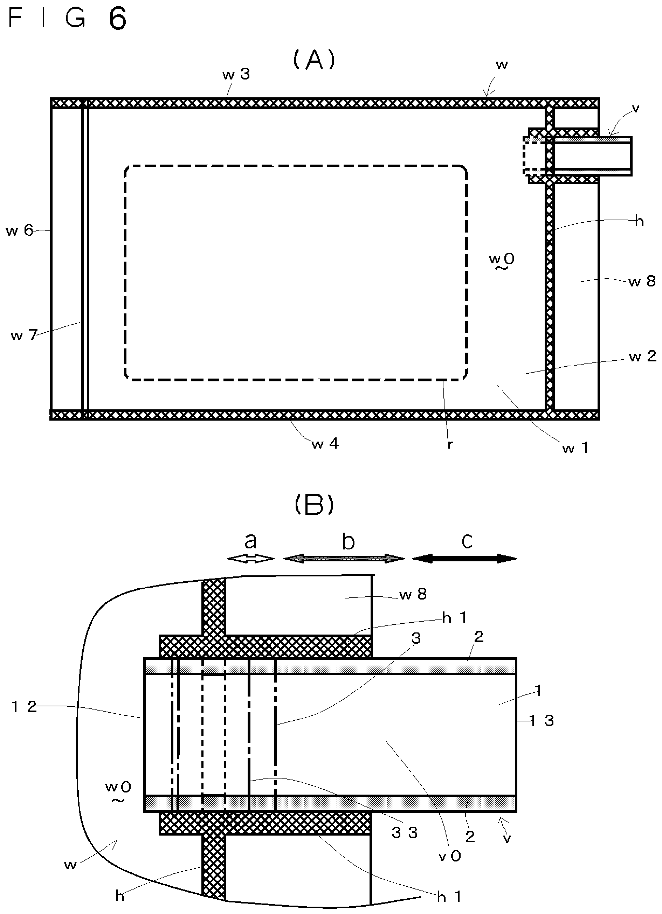

As shown in FIG. 6(B), even if the non-welding film 33 overlaps the side seal portion 2 and the sealing by the side seal portion 2 is interrupted, the side of the exterior film 1 may be closed by providing an extension portion w8 extending to the outside of the sealed portion h with respect to the side w5 to which the closing valve v of the sealed bag w is attached, and by providing an auxiliary sealed portion h1 crossing the sealed portion h, coming into contact with the side seal portion 2, and extending parallel to the side seal portion. As shown in FIGS. 6(A) and 6(B), the auxiliary sealed portion h1 is provided from the inside of the sealed bag w to the extension portion w8. The auxiliary sealed portion h1 can be formed on the upper sheet w1 and the lower sheet w2 by heat sealing when the sealed bag w is formed together with the sealed portion h.

The upper and lower exterior films 1 and the upstream valve film 3 may be formed of a single synthetic resin film such as polyethylene or a laminate, and a surface (i.e., the lower surface of the upper exterior film 1a, the upper surface of the lower exterior film 1b, and the upper surface of the upstream valve film 3) composing the inner surface of the flow path v0 is preferably a self-adhesive surface. The film including the self-adhesive surface on one side may be a coextrusion die obtained by coextruding a film base material such as polyethylene and a self-adhesive thermoplastic resin such as ethylene vinyl acetate copolymer resin (EVA), or a coating die obtained by coating a film base material such as polyethylene with an adhesive.

### (Upstream valve portion a)

The upstream valve portion a is implemented as a check valve that includes the upstream valve film 3 described above, and as shown in FIG. 3(B), the upper surface of the flap portion 31 of the upstream valve film 3 comes into close contact with the lower surface of the opposing upper exterior film 1a, and the closing valve v is brought into a valve closed state.

For the purpose of preventing the valve opening operation from being impeded by the adhesion of the upstream valve film 3 to the upper surface of the lower exterior film 1b to which the upstream valve film 3 is fixed, as shown in FIG. 3(B), the flap portion 31 can be provided on the lower surface thereof with a hardly pressure-sensitive adhesion part 35 on the surface facing the exterior film 1 (lower exterior film 1b) (FIG. 3(B)), but may be provided without the hardly pressure-sensitive adhesion part 35.

### (Buffer portion b)

The above-described embodiment can be said to be a conventional closing valve (check valve), but a feature of the closing valve of the present invention is that, as shown in FIG. 2(B), a valve portion includes at least two valve portions, that is, the upstream valve portion a and the downstream valve portion c, which is positioned downstream with respect to the upstream valve portion, and the buffer portion b for retaining the fluid in the flow path v0 is provided in the upstream valve portion a and the downstream valve portion c.

In the buffer portion b, the upper and lower exterior films 1 directly face each other, and the surface (i.e., the lower surface of the upper exterior film 1a and the upper surface of the lower exterior film 1b) composing the inner surface of the flow path v0 is a self-adhesive surface as described above, and one or both of the exterior films 1 are provided with a hardly pressure-sensitive adhesion portion 4. The hardly pressure-sensitive adhesion portion 4 is made to be of hardly adhesive property as compared to a case where the self-adhesive surfaces face each other. The hardly pressure-sensitive adhesion portion 4 does not have adhesiveness and prevents the two exterior films 1 from coming into close contact.

As shown in FIGS. 2(B) and 3(A), in this example, the hardly pressure-sensitive adhesion portion 4 is provided on the lower surface of the upper exterior film 1a, but may be provided on the upper surface of the lower exterior film 1b, or may be provided on both the upper exterior film 1a and the lower exterior film 1b. Thus, as the internal pressure in the buffer portion b increases, the buffer portion b provides an inflated space in which fluid is retained.

The hardly pressure-sensitive adhesion portion 4 can be formed by using well-known ink that reduces the self-adhesiveness of the exterior film 1 to coat the ink on the exterior film 1. However, it is also possible to form the hardly pressure-sensitive adhesion portion 4 by other means such as arranging another film other than the ink. In FIG. 2(B), in order to make the arrangement of the hardly pressure-sensitive adhesion portion 4 easy to understand, the thickness of the hardly pressure-sensitive adhesion portion 4 is emphasized to be larger than that of the other components.

### (Downstream valve portion c)

The downstream valve portion c does not include a valve body film in this example. In the downstream valve portion c, the exterior film 1 does not include the hardly pressure-sensitive adhesion portion 4 such as the buffer portion b. Therefore, in the downstream valve portion c, the lower surface of the self-adhesive upper exterior film 1a and the upper surface of the self-adhesive lower exterior film 1b directly face each other, and they come into close contact with each other as an adhesive portion 5 to close the gap between the upper and lower exterior films 1 (FIG. 3(B)).

By the close contact, the downstream valve portion c limits the reverse flow as well as the forward flow of fluid. The downstream valve portion c is opened by receiving pressure from a fluid. Therefore, unless the internal pressure of the flow path v0 in the buffer portion b becomes higher than that of the downstream side of the downstream valve portion c, the downstream valve portion c maintains the valve closed state by the self-adhesion. In this example, since the fluid is a gas, the downstream valve portion c is closed unless the internal pressure of the buffer portion b becomes higher than the external pressure.

### (Closedness of flow path)

The closedness of the flow path depends on the thickness, flexibility, shape, and the like of the vertically opposed films composing the flow path v0, and the largest factors that influence the closedness include two factors of the adhesiveness and the width of the flow path.

The adhesiveness, which is the first factor, is about the level of adhesiveness of the vertically opposed films composing the flow path v0, and the higher the adhesiveness is, the higher the closedness of the flow path is, and the lower the adhesiveness is, the lower the closedness of the flow path is. Adhesiveness can be measured by the T-type peel strength test, but it can also be measured by the opening test of the cylindrical body (a test in which a cylindrical body is produced by vertically opposed films, and after these films are held in a predetermined range by a predetermined force and brought into close contact, a fluid is introduced from one end of the cylindrical body, and the pressure of the fluid when the fluid comes out from the other end is measured).

The width of the flow path, which is the second factor, is about the length of the width of the flow path (i.e., the distance in the direction orthogonal to the flow direction of the fluid in the flow path v0), and when the adhesiveness is the same, the smaller the width of the flow path is, the higher the closedness of the flow path is.

### (Operation of closing valve v)

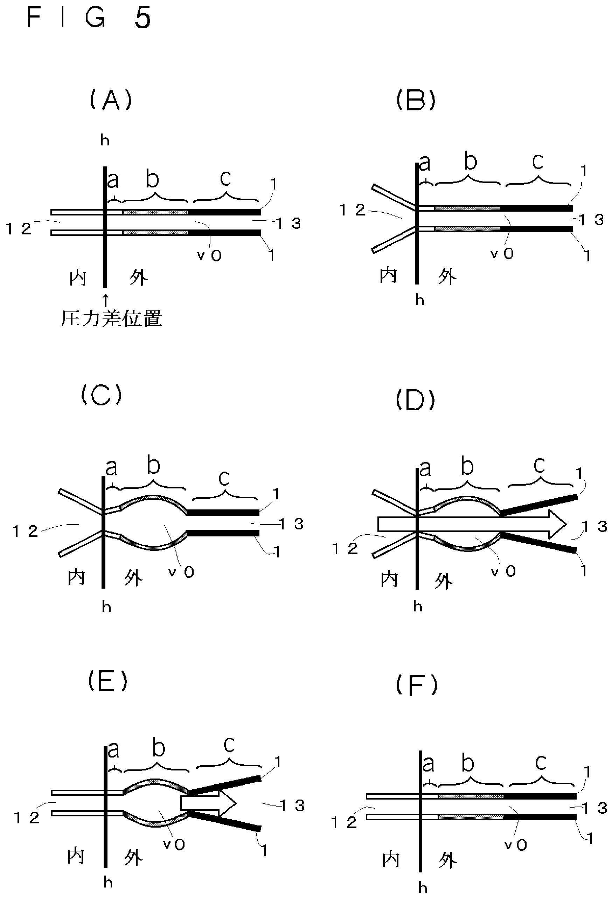

The operation of the closing valve v will be briefly described with reference to FIG. 5. Here, the details of the structure of each valve portion will be omitted and only the operation will be described. Here, the upstream side refers to the upstream side with respect to the buffer portion b in the fluid flow path v0, and the downstream side refers to the downstream side with respect to the buffer portion b in the fluid flow path v0.

As shown in FIG. 5(A), in a state where the pressure is balanced between the inside and outside of the sealed bag w in the initial stage of use, there is no movement of fluid in the flow path v0, both the upstream valve portion a and the downstream valve portion c are closed, and the buffer portion b is also contracted to narrow the width between the two exterior films 1.

When the pressure on the upstream side increases and in the internal pressure, a relation of the upstream side > the buffer portion b = the downstream side is satisfied, for example, the increase ratio of the internal pressure of a:b:c becomes +1:0:0 (atmospheric pressure), the upstream valve portion a on the upstream side opens as shown in FIG. 5(B). As shown in FIG. 5(C), a fluid flows into the buffer portion b due to the opening of the upstream valve portion a, and the buffer portion b is inflated in the valve closed state of the downstream valve portion c. Since the buffer portion b is arranged in a bag outside section of the flow path v0, the buffer portion b can be inflated relatively freely without being affected by the internal pressure of the sealed bag w as in a bag inside section from the surface side of the exterior film 1, and can sufficiently perform the function of retaining the fluid as a buffer.

The internal pressure of the buffer portion b increases, and in the internal pressure of the flow path v0, via a state of the upstream side ≧ the buffer portion b ≧ the downstream side, a relation of the upstream side = the buffer portion b > the downstream side is satisfied, for example, the increase ratio of the internal pressure of a:b:c becomes +1:+1:0, and as shown in FIG. 5(D), the downstream valve portion c as well as the upstream valve portion a is opened to start deaeration.

When the pressure on the upstream side is reduced due to deaeration, as shown in FIG. 5(E), the upstream valve portion a is closed in a state where the downstream valve portion c is opened, and the internal pressures of the upstream side and the buffer portion b are shifted to a balanced state. That is, the internal pressure goes through a state of the upstream side ≦ the buffer portion b > the downstream side, for example, a state of the increase ratio of the internal pressure of +0.5:+1:0, and then shifts to a state of the upstream side = the buffer portion b ≥ the downstream side, for example, a state of the increase ratio of the internal pressure of 0(-1):+0.5:0. Finally, the internal pressure of the buffer portion b and that of the downstream side are balanced. That is, as shown in FIG. 5(F), the internal pressure shifts to a state of the upstream side = the buffer portion b = the downstream side or the upstream side ≦ the buffer portion b = the downstream side, for example, the increase ratio of the internal pressure of 0(-1):0:0.

In any of the balanced states shown in FIGS. 5(E) and 5(F), since the pressure difference between the bag inside section and the bag outside section bounded by the upstream valve portion a is larger than the balanced state in the conventional case shown in FIG. 10(E), it is also easier to block the flow path v0 as compared to the conventional case shown in FIG. 10.

Note that, when the upstream side and the buffer portion b are balanced shown in FIG. 5(E), there is a possibility that a slight reverse flow occurs from the buffer portion b to the upstream side, but the fluid in the buffer portion b is a fluid that has been on the upstream side from the buffer portion until it is retained in the buffer portion. Therefore, there is no problem that a fluid from the outside of the bag enters.

Next, in the balanced state between the buffer portion b and the downstream side from the buffer portion shown in FIG. 5(F), there is a possibility that the fluid on the downstream side (atmosphere in the case of deaerating bags) slightly flows back toward the buffer portion, but at this time, the upstream valve portion a is closed to close the flow path, and hence the reverse flow to the inside of the bag hardly occurs.

In the next operation, that is, when the downstream valve portion is opened, the fluid entering the buffer portion from the downstream side of the buffer portion is discharged to the downstream side of the buffer portion again, and the fluid in the upstream side with respect to the buffer portion is filled in the buffer portion.

Therefore, in any of the above balanced states, the reverse flow of the external fluid into the bag can be suppressed.

Particularly, in the bag according to the present invention, since the buffer portion is arranged in the bag outside section in the flow path, the cylindrical closing valve can expand and contract without being affected by the internal pressure of the bag. Therefore, in the present invention, the above effect can be exerted more remarkably.

### (Means for causing buffer portion b to function)

In order for the buffer portion b to effectively exert its function, it is necessary to configure the buffer portion b to be inflated by the fluid during forward flow (upon exiting through the flow path v0 from the containment space w0).

Therefore, as the first means, the buffer portion b needs to be configured in such a manner that the closedness of the flow path is lower than that of the downstream valve portion c, and more preferably, the closedness of the flow path is lower than that of both the upstream valve portion a and the downstream valve portion c.

In the first embodiment, since the upstream valve portion a, the buffer portion b, and the downstream valve portion c have the same width of the flow path v0, the closedness is determined by the adhesiveness.

In this embodiment, the upstream valve portion a and the downstream valve portion c have the equal closedness, and the closedness of the buffer portion b having the hardly pressure-sensitive adhesion portion 4 is lower than that of both of the valve portions a and c.

When the upstream valve portion a, the buffer portion b, and the downstream valve portion c have the equal adhesiveness by not providing the buffer portion b with the hardly pressure-sensitive adhesion portion 4, the width of the flow path v0 of the buffer portion b can be made wider than that of the downstream valve portion c, and more preferably, it can be made wider than that of both of the upstream valve portion a and the downstream valve portion c.

As the second means, when the fluid flows out (when the upstream valve portion a is opened due to an increase in the internal pressure of the containment space w0), if the downstream valve portion c is also opened immediately after the fluid is introduced into the buffer portion b, the buffer portion b may not be inflated by the fluid, and hence measures for preventing this is taken.

As the second means, in this embodiment, a sufficient length is given to the buffer portion b.

Specifically, in the buffer portion b, the length of the fluid in the flow direction of the flow path v0 is longer than that of at least one of the upstream valve portion a and the downstream valve portion c, and more desirably, the length of the fluid in the flow direction of the flow path v0 is longer than that of both of the upstream valve portion a and the downstream valve portion c.

As shown in FIG. 2(B), the length of the upstream valve portion a and the downstream valve portion c indicates the length of a portion functioning as a valve portion to close the flow path, and the length of the upstream valve portion a is the length of a region of the flap portion 31 downstream with respect to the fixing portion 32 and a region not overlapping the hardly pressure-sensitive adhesion portion 4. The length of the buffer portion b is the length of a region where the hardly pressure-sensitive adhesion portion 4 is provided. The length of the downstream valve portion c is the length of a region where the adhesive portion 5 is provided downstream with respect to the hardly pressure-sensitive adhesion portion 4.

In this embodiment, in the buffer portion b, the length of the fluid in the flow direction of the flow path v0 is longer than that of both of the upstream valve portion a and the downstream valve portion c.

### (Buffer portion continuation d)

The space between the upstream valve film 3 and the lower exterior film 1b overlapped the lower surface of the upstream valve film 3 is sealed by the fixing portion 32 on the upstream side thereof, and is conducted to the buffer portion b on the downstream side thereof. As a result, some of the fluid having entered the buffer portion b may be introduced into the space between the upstream valve film 3 and the lower exterior film 1b as shown in FIG. 3(B), and this space will be described as a buffer portion continuation d in the following description.

### (Second embodiment)

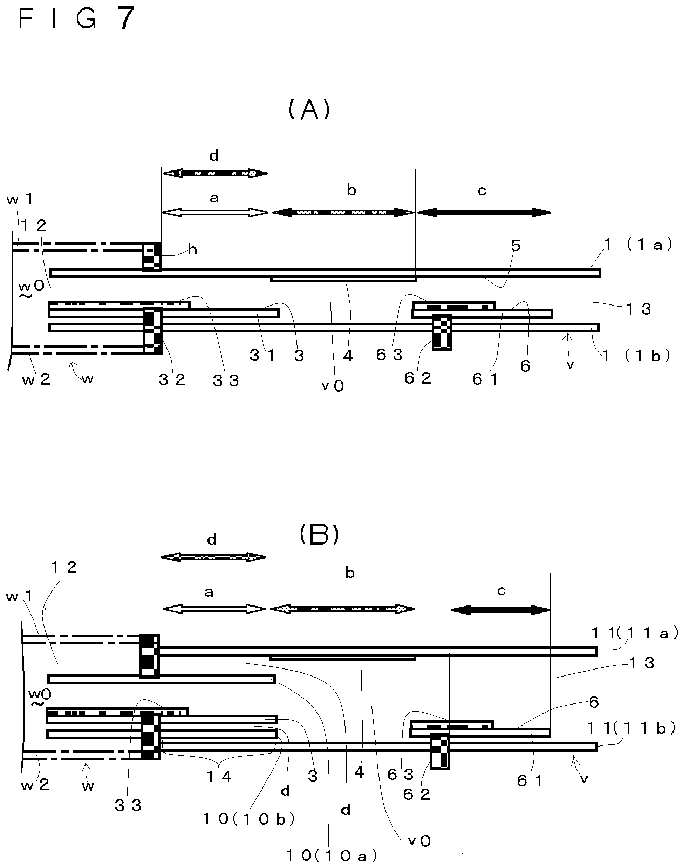

As shown in FIG. 7(A), the downstream valve portion c may be provided with a valve body film, similarly to the upstream valve portion a. Specifically, in the downstream valve portion c, a downstream valve film 6 is fixed to one of the exterior films 1 as the valve body film. The downstream valve film 6 includes a sub flap portion 61 and a sub fixing portion 62 having the same functions as the flap portion 31 and the fixing portion 32. That is, in the downstream valve portion c, the downstream valve film 6 is fixed to the upper surface of the lower exterior film 1b by the sub fixing portion 62. The sub flap portion 61 extends toward the downstream side from the sub fixing portion 62.

The sub flap portion 61 is provided with a sub non-welding film 63 similar to the non-welding film 33.

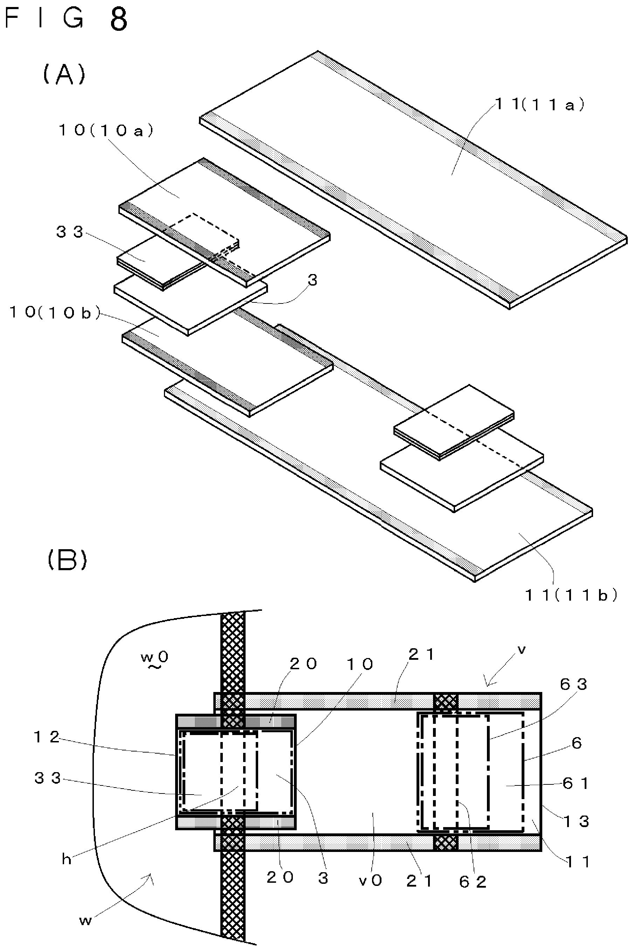

The sub fixing portion 62 is heat-sealed by a well-known heat sealing device from the surface side of one exterior film 1 (in this example, the lower exterior film 1b) to which the downstream valve film 6 is attached at the time of manufacturing the closing valve v before attaching it to the sealed bag w, so that the sub fixing portion 62 crossing the rectangular sub flap portion 61 in a plan view can be formed (FIG. 8(B), which is referred to in a third embodiment, shows a state in which the sub flap portion 61 is viewed in a plan view).

Also in the second embodiment shown in FIG. 7(A), the lower surface of the upper exterior film 1a and the upper surface of the lower exterior film 1b, which compose the inner surface of the flow path v0, have the self-adhesiveness described above as the adhesive portion 5. On the other hand, the opposing surfaces (more specifically, the upper surface of the upper exterior film 1a and the lower surface of the lower exterior film 1b) may not have the self-adhesiveness.

Similarly to the upstream valve film 3, the upper surface of the downstream valve film 6 has the self-adhesiveness. On the other hand, the opposing surfaces (more specifically, the lower surface of the downstream valve film 6 and that of the upstream valve film 3) may not have the self-adhesiveness.

Matters not specifically mentioned in the second embodiment are the same as those in the first embodiment.

### (Third embodiment)

In this example, as shown in FIGS. 7(B), 8(A), and 8(B), each of the exterior films 1 is composed of a first composition film 10 and a second composition film 11, which are formed separately from each other.

That is, the upper exterior film 1a is composed of two films, which are an upper first composition film 10a and an upper second composition film 11a, and the lower exterior film 1b is composed of a lower first composition film 10b and a lower second composition film 11b. The upper first composition film 10a and the lower first composition film 10b are overlapped to form a flat cylinder whose side portions are sealed by the side seal portion 20. The upper second composition film 11a and a lower second composition film 11b are also overlapped to form a flat cylinder whose side portions are sealed by a sub side seal portion 21 (FIG. 8(B)). In FIG. 8(A) showing a state in which the closing valve v is disassembled, a dark (dense) spot indicates a region to be referred to as the side seal portion 20, and a thin (sparse) spot indicates a region to be referred to as the sub side seal portion 21.

The cylinder composed by the second composition film 11 has a larger cylinder diameter than that of the cylinder composed by the first composition film 10. As shown in FIG. 8(B), the width across the flow path v0 of the second composition film 11 is larger than that of the first composition film 10.

A part of the flow path v0 is provided between the upper first composition film 10a and the lower first composition film 10b, and another part of the flow path v0 is also provided between the upper second composition film 11a and the lower second composition film 11b.

That is, each of the second composition films 11 is indirectly via a part of the sealed bag w or directly connected to each of the first composition films 10 at the pressure difference position to provide another part of the flow path v0 extending from the first composition film 10 toward the outside of the bag. In this example, the second composition film 11 is fixed to the sealed bag w by the sealed portion h and is indirectly connected to the first composition film 10 (FIGS. 7(B) and 8(B)). However, the second composition film 11 can be fixed directly to the first composition film 10.

Each of the second composition films 11 is arranged on the outside of the bag, and the flow path v0 provided is defined as a section on the outside of the bag.

As shown in FIGS. 7(B) and 8(B), the upper first composition film 10a and the non-welding film 33 on the lower first composition film 10b provide the inflow portion 12, and the upper and lower second composition films 11 and 11 provide the outflow portion 13. The upper and lower first composition films 10 and 10 include an interior portion 14 that extends from the pressure difference position toward the outside of the bag and is interposed between the second composition films 11 and 11. The upstream valve film 3 is arranged above and fixed to one of the first composition films 10 (the lower first composition film 10b). The downstream valve film 6 is arranged above and fixed to one of the second composition films 11 (the lower second composition film 11b).

In this example, the downstream valve portion c includes the downstream valve film 6 as described above. However, similarly to the first embodiment, the downstream valve portion c may not include the downstream valve film 6.

In this embodiment, the region of the hardly pressure-sensitive adhesion portion 4 between a tip end of the interior portion 14 and the downstream valve film 6 is defined as the buffer portion b.

As shown in FIG. 7(B), the space between the upper surface of the upper first composition film 10a of the interior portion 14 and the lower surface of the upper second composition film 11a facing the upper surface of the upper first composition film 10a, and the space between the lower surface of the lower first composition film 10b of the interior portion 14 and the upper surface of the lower second composition film 11b compose the buffer portion continuation d. The buffer portion continuation d is conducted to the buffer portion b, and a part of the fluid flows into the buffer portion continuation d.

In the example of FIG. 7(B), the self-adhesiveness of the lower surface of the upper first composition film 10a is greater than the self-adhesiveness of the upper surface of the upper first composition film 10a. The upper surface of the lower second composition film 11b does not have the self-adhesiveness. The self-adhesiveness of the upper surface of the upper first composition film 10a is smaller than the self-adhesiveness of the lower surface of the upper first composition film 10a, but is larger than the self-adhesiveness of the upper surface of the lower second composition film 11b. Therefore, relatively, if the self-adhesiveness of the lower surface of the upper first composition film 10a is large, the self-adhesiveness of the upper surface of the upper first composition film 10a is moderate, and the self-adhesiveness of the upper surface of the lower second composition film 11b is small. As described above with respect to self-adhesiveness, at least a surface of the upstream valve film 3 opposite to the non-welding film 33 has a moderate self-adhesiveness. In the interior portion 14, the lower surface of the lower first composition film 10b also has a moderate self-adhesiveness. The self-adhesiveness of the upper surface of the lower first composition film 10b is large.

The self-adhesiveness of the downstream valve film 6 in the third embodiment is the same as that described in the second embodiment.

In addition, matters not specifically mentioned in the third embodiment are the same as those in the first and second embodiments.

### (Fourth example - not in accordance with the present invention)

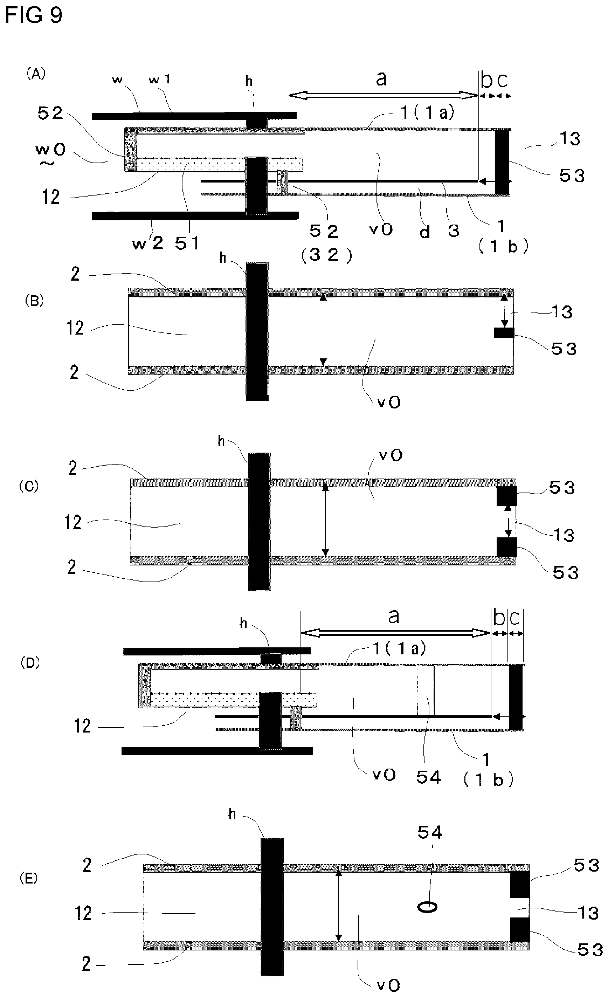

A fourth embodiment will be described with reference to FIG. 9.

FIG. 9(A) is a sectional view of the closing valve according to the fourth embodiment, and FIG. 9(B) is a plan view of the same.

The closing valve is a modification of the first embodiment, only the main differences are described, and the closing valve is substantially the same as that of the first embodiment in that the same reference numerals are given and no description is given.

First, the inflow portion 12 in this example has a structure in that the containment space w0 of the bag w is opened in a planar shape. The upper exterior film 1a is elongated inside the containment space w0, and a filter 51 such as a nonwoven fabric is arranged therebelow. The upper exterior film 1a and the filter 51 inside the containment space w0 have substantially the same size and shape, and the periphery thereof is fixed by the heat seal of a filter fixing portion 52. The fluid inside the containment space w0 is introduced into the flow path v0 through the filter 51, whereby fine powder and the like can be prevented from being introduced into the closing valve or flowing out to the outside.

In this example, the upstream valve film 3 is fixed by the filter fixing portion 52 with the filter 51 positioned outside the bag w from the position of the sealed portion h, and the filter fixing portion 52 serves also as the fixing portion 32. The upstream valve film 3 has the flap portion 31 on the downstream side of the filter fixing portion 52 and the fixing portion 32. The upstream valve film 3, together with the upper and lower exterior films 1a and 1b, is sandwiched between the upper sheet w1 and the lower sheet w2 of the bag w and fixed by the sealed portion h.

Regardless of the manufacturing process, this structure allows the closing valve v in a state where the upstream valve film 3 is fixed by the filter fixing portion 52 with the filter 51 to be inserted between the upper sheet w1 and the lower sheet w2 of the bag w to be heat-sealed. One of the filter fixing portion 52 and the sealed portion h may be located outside the other, or the filter fixing portion 52 and the sealed portion h may be located at the same position. However, if the filter fixing portion 52 and the sealed portion h are located at the same position, the heat sealing property may be lowered, and hence it is preferable to make the seal positions different.

In this example, since the filter fixing portion 52 is positioned outside the bag w with respect to the position of the sealed portion h, the upstream valve portion a is positioned downstream with respect to the heat seal of the filter fixing portion 52.

Note that the structure of the inflow portion 12 can also be adopted in each of the above-described embodiments.

### (Buffer portion b and downstream valve portion c)

Next, in this example, in the buffer portion b, the exterior film 1 (the upper exterior film 1a and the lower exterior film 1b) does not include the hardly pressure-sensitive adhesion portion 4, and thus is not in accordance with the present invention, and both the lower surface of the upper exterior film 1a with self-adhesiveness and the upper surface of the lower exterior film 1b with self-adhesiveness directly face each other and they make close contact each other as the adhesive portion 5. Therefore, there is no difference between the buffer portion b and the downstream valve portion c in that the buffer portion b and the downstream valve portion c close between the upper and lower exterior films 1.

In other words, the buffer portion b and the downstream valve portion c are common in that they compose a tip space between the downstream end of the upstream valve film 3, which is a valve body film, and the downstream end of the exterior film 1 (the upper exterior film 1a and the lower exterior film 1b).

This tip space is divided, depending on the level of closedness, into a highly closed space composing the downstream valve portion c and a lowly closed space composing the buffer portion b. Specifically, the downstream valve portion c is a portion having the smallest width of the flow path v0 without the valve body film, and the buffer portion b is a portion having a larger width of the flow path v0 than that of the highly closed space composing the downstream valve portion c. In this example, as shown in FIG. 9(B), a downstream valve point seal 53 is provided at the center of the flow path v0, thereby narrowing the width of the flow path and enhancing the closedness.

More specifically, as described above, the closedness of the flow path depends on the thickness, flexibility, shape, and the like of the vertically opposed films composing the flow path v0, and the largest factors that influence the closedness include two factors, namely, the adhesiveness and the width of the flow path.

As for the adhesiveness, which is the first factor, the buffer portion b and the downstream valve portion c have the same adhesiveness.

As for the width of the flow path, which is the second factor, since the width of the flow path (i.e., the distance in the direction orthogonal to the flow direction of the fluid in the flow path v0) is smaller in the downstream valve portion c than in the buffer portion b, the closedness of the flow path is high.

The upstream valve film 3 has the equal adhesiveness to that of the buffer portion b and the downstream valve portion c in terms that the upper surface of the upstream valve film 3 has self-adhesiveness and faces the lower surface of the upper exterior film 1a. As in the buffer portion b, the width of the flow path is larger than that of the downstream valve portion c. Therefore, the closedness of the flow path is the highest in the downstream valve portion c, and the upstream valve portion a and the buffer portion b are substantially equal to each other.

### (Means for causing buffer portion b to function)

As described above, in order for the buffer portion b to effectively exert its function, it is necessary to configure the buffer portion b to be inflated by the fluid during forward flow (upon exiting through the flow path v0 from the containment space w0).

Therefore, as the first means, the buffer portion b needs to be configured in such a manner that the closedness of the flow path is lower than that of the downstream valve portion c, and more preferably, the closedness of the flow path is lower than that of both the upstream valve portion a and the downstream valve portion c.

As the second means, when the fluid flows out (when the upstream valve portion a is opened due to an increase in the internal pressure of the containment space w0), if the downstream valve portion c is also opened immediately after the fluid is introduced into the buffer portion b, the buffer portion b may not be inflated by the fluid, and hence it is necessary to take measures to prevent this.

As specific means for satisfying the second means, in this embodiment, the closedness of the downstream valve portion c is made higher than that of the upstream valve portion a.

If these two means are brought together, the closedness of the downstream valve portion c is configured to be higher than that of both of the upstream valve portion a and the buffer portion b, and in this embodiment, the width of the flow path is minimized by providing the downstream valve point seal 53.

Thus, under the condition where the pressure difference is relatively small, even if the internal pressure of the bag w increases to the fluid pressure at which both the upstream valve portion a and the buffer portion b open, the highly closed downstream valve portion c does not open. Thus, even when the length of the buffer portion b is short, the fluid stops and inflates in the buffer portion b. A part of the fluid having entered the buffer portion b also flows into the buffer portion continuation d between the upstream valve film 3 and the lower exterior film 1b.

The lengths of the flow path v0 of the buffer portion b and the downstream valve portion c in the flow direction can be set on a condition of exerting the operation described above, and it is appropriate that each of them is set to a length of at least 2 mm and more preferably, a length of at least 3 mm or more.

As shown in FIG. 9(C), a plurality of downstream valve point seals 53 may be provided, for example, on the left and right sides.

As shown in FIGS. 9(D) and 9(E), an upstream valve point seal 54 may be provided between the upstream valve film 3 and the upper exterior film 1a, where the closedness needs to be made higher in the downstream valve portion c. Specifically, it is necessary to make the flow path width narrower in the downstream valve portion c by increasing the number or width of the downstream valve point seals 53.

As described above, in this example, the closedness of the flow path is realized only by the flow path width, but it is also possible to realize the closedness by the adhesiveness as shown in the above embodiments, or it is also possible to use both in combination.

### (Other modifications)

The upstream valve portion a may be composed of a pair of opposed upstream valve films 3. That is, the upstream valve film 3 may be provided also on the exterior film 1 opposed to the exterior film 1 provided with the upstream valve film 3, and thus the upstream valve portion a is closed by the close contact of the flap portions 31 of both of the upstream valve films 3, and the upstream valve portion a is opened by the separation of the flap portions. Also in the case where the downstream valve portion c includes a valve body film, the downstream valve portion c may be provided with a pair of opposing valve body films (the downstream valve films 6), unlike those shown in FIGS. 7(A) and 7(B).

The number of the valve portions is not limited to two portions of the upstream valve portion a and the downstream valve portion c, and it is also possible to provide three or more valves on the condition that a space in which the fluid is retained between flowing in the flow path v0 from the upstream valve portion a and flowing out from the downstream valve portion c is generated.

Although each of the above embodiments has been described by presenting an example of the deaerating valve of a sealed bag for food, the bag w of the present invention is not limited to a deaerating bag for discharging a gas, and discharge of something other than a gas such as a liquid may be performed by the closing valve v. In addition, the closing valve v according to the present invention may be implemented as the closing valve v for preventing the reverse flow of the fluid when the fluid is discharged from the sealed bag w to the outside of the bag, or for preventing the reverse flow when the fluid is injected from the outside of the bag into the bag.

The position where the closing valve v is arranged is not limited to the end of the bag w, but may be a central part. For example, it may be provided at the position of the back seal of a pillow package, or a hole may be made in one sheet instead of between two sheets, and the whole circumference of the filter 51 shown in FIG. 9 may be sealed to the sheet by heat sealing or the like.

The sealed portion h of the sealed bag w may be formed by another well-known means such as use of not only heat sealing but also an adhesive. The side seal portion 2 of the closing valve v may be formed not only by heat sealing but also by an adhesive. Attachment of each valve body film can be carried out not only by heat sealing but also by an adhesive. When an adhesive is used, the non-welding film 33 and the sub non-welding film 63 can be omitted.

As described above, coffee, fermented food, futon bedding, and clothes have been exemplified as the contained items of the sealed bag w. As long as the sealed bag w can be used as the deaerating bag, an object other than those exemplified can be contained as a contained item. The above fermented food is not limited to a typical fermented food such as miso (fermented soybean paste), koji (malted rice), and pickles. Examples of use for other than food include, as described above, use of the sealed bag as a storage bag for storing futon bedding or clothes. This storage bag can reduce the volume by removing air inside the bag from the closing valve v, which is a deaerating valve, after storing futon bedding or clothes as a compression bag.

The sealed bag may be used, for example, as a cushioning material to be used as an air cushion where air is injected, in addition to containing an object to be contained as a contained item.

The above-described embodiments and the above-described modifications are merely examples of embodiments of the present invention, and other embodiments are not excluded as long as the configuration described in the claims of the present invention is adopted.

### Reference Signs List

- a: upstream valve portion
- b: buffer portion
- c: downstream valve portion
- d: buffer portion continuation
- f, w: bag
- h: sealed portion
- h1: auxiliary sealed portion
- v: closing valve
- v0: flow path
- w: sealed bag
- w0: containment space
- w1: upper sheet
- w2: lower sheet
- w6: opening portion
- w7: fastener
- w8: extension portion
- 1, 1a, 1b: exterior film
- 1a: upper exterior film
- 1b: lower exterior film
- 2: closed portion
- 2, 20: side seal portion
- 3: upstream valve film
- 4: hardly pressure-sensitive adhesion portion
- 5: adhesive portion
- 6: downstream valve film
- 10, 10a, 10b: first composition film
- 11, 11a, 11b: second composition film
- 12: inflow portion
- 13: outflow portion
- 14: interior portion
- 21: sub side seal portion
- 31: flap portion
- 32: fixing portion
- 33: non-welding film
- 34: welding film
- 35: hardly pressure-sensitive adhesion part
- 51: filter
- 52: filter fixing portion
- 53: downstream valve point seal
- 54: upstream valve point seal
- 61: sub flap portion
- 62: sub fixing portion
- 63: sub non-welding film

## Claims

1. A closing valve (v) having a flexible and substantially cylindrical shape and made of a sheet, in which: upper and lower exterior films (1a, 1b) are arranged above and below as an outside of the valve (v) and both sides (2) of the exterior films (1a, 1b) are closed together to form closed portions; one end side serves as an inflow portion (12) to a forward flow, and the other end side serves as an outflow portion (13) to the forward flow; a flow path for the forward flow and a reverse flow flowing in an opposite direction of the forward flow is composed between the inflow portion (12) and the outflow portion (13); and the flow path includes a valve portion that restricts movement of a fluid in the flow path, wherein:
the valve portion includes an upstream valve portion (a), a downstream valve portion (c) and a buffer portion (b), the downstream valve portion being positioned downstream of the upstream valve portion (a) relative to a flow in the forward flow direction; and
the buffer portion (b) for retaining a fluid in the flow path is composed between the upstream valve portion (a) and the downstream valve portion (c);
wherein:
at least the upstream valve portion (a) includes, as a valve body film, at least one film (3) providing a check valve that in use is open in the forward flow and closed in the reverse flow;
the valve body film (3) in use opens or closes the flow path by opening from or coming into close contact with the upper exterior film that overlaps an upper surface of the valve body film (3); and
the valve body film (3) is fixed to the lower exterior film (1b) that overlaps a lower surface of the valve body film (3) in a sealed state on an upstream side of the valve body film (3), and the valve body film (3) extends to the buffer portion (b) on the downstream side of the valve body film (3) so that the valve body film (3) and the lower exterior film (1b) overlapped on the lower surface of the valve body film (3) provide in between a buffer portion continuation (d); and
the valve body film (3) is not provided in the downstream valve portion (c);
a tip space is arranged between a downstream end of the valve body film (3) and a downstream end of the upper and lower exterior films (1a, 1b); and
the tip space is a space in which the upper and lower exterior films (1a, 1b) directly face each other, **characterized in that** the tip space includes a lower closedness space providing the buffer portion (b) and a higher closedness space positioned on a downstream side of the buffer portion (b) and providing the downstream valve portion (c);
wherein at least any one of the upper and lower exterior films (1a, 1b) includes a hardly pressure-sensitive adhesion portion (4) in the buffer portion (b); and
the hardly pressure-sensitive adhesion portion (4) makes a space between the upper and lower exterior films (1a, 1b) in the buffer portion (b) that is less adhesive than a space between the upper and lower exterior films (1a, 1b) in the upstream valve portion (a) and the downstream valve portion (c).

2. The closing valve (v) according to claim 1 wherein
closedness of the flow path in the upstream valve portion (a) is lower than the closedness of the downstream valve portion (c).

3. The closing valve (v) of claim 1 or 2 wherein a length in a flow direction of the fluid in the flow path in the buffer portion (b) is longer than a length of at least any one of the upstream valve portion (a) and the downstream valve portion (c).

4. The closing valve (v) according to any one of claims 1 to 3, wherein a flow path width of the flow path is narrower in the downstream valve portion (c) than a flow path width in the buffer portion (b) and a flow path width in the upstream valve portion (a).

5. A bag (w), comprising the closing valve (v) according to any one of claims 1 to 4.

6. A bag (w) according to claim 5, the closing valve (v) being fixed to sheets (w1, w2), the sheets providing a containment space (w0) for the bag (w), wherein:
the check valve includes a fixing portion (32) fixed to one of the upper and lower exterior films and a flap portion that extends from the fixing portion (32) toward the outflow portion (13); and
the fixing portion (32) is arranged, in a flow direction of the forward flow, at a position equal to, or downstream with respect to, a pressure difference position, the pressure difference position being through a sealed portion (h) of the bag (w) that divides an inside and an outside of the containment space (w0), the sealed portion (h) being provided by sealing the sheets (w1, w2) that provide the bag (w) to each other.

## Patentansprüche

1. Schließventil (v) mit einer flexiblen und im Wesentlichen zylindrischen Form und aus einer Folie gefertigt, bei der:
ein oberer und unterer Außenfilm (1a, 1b) oben und unten als Außenseite des Ventils (v) angeordnet sind und beide Seiten (2) der Außenfilme (1a, 1b) zusammen geschlossen sind, um geschlossene Abschnitte zu bilden; eine Endseite als Einlassabschnitt (12) für eine Vorwärtsströmung dient und die andere Endseite als Auslassabschnitt (13) für eine Vorwärtsströmung dient; ein Strömungsweg für die Vorwärtsströmung und eine Gegenströmung, die in eine der Vorwärtsströmung entgegengesetzte Richtung strömt, zwischen dem Einlassabschnitt (12) und dem Auslassabschnitt (13) aufgebaut ist; und der Strömungsweg einen Ventilabschnitt einschließt, der Bewegung eines Fluids in dem Strömungsweg einschränkt, wobei:
der Ventilabschnitt einen stromaufwärtigen Ventilabschnitt (a), einen stromabwärtigen Ventilabschnitt (c) und einen Pufferabschnitt (b) einschließt, wobei der stromabwärtige Ventilabschnitt stromabwärts von dem stromaufwärtigen Ventilabschnitt (a) relativ zu einer Strömung in der Richtung der Vorwärtsströmung positioniert ist; und
der Pufferabschnitt (b) zum Halten eines Fluids in dem Strömungsweg zwischen dem stromaufwärtigen Ventilabschnitt (a) und dem stromabwärtigen Ventilabschnitt (c) aufgebaut ist;
wobei:
mindestens der stromaufwärtige Ventilabschnitt (a) als Ventilgehäusefilm mindestens einen Film (3) einschließt, der ein Rückschlagventil bereitstellt, das im Gebrauch in der Vorwärtsströmung geöffnet und in der Gegenströmung geschlossen ist;
der Ventilgehäusefilm (3) im Gebrauch den Strömungsweg öffnet oder schließt, indem er sich von dem oberen Außenfilm, der eine obere Oberfläche des Ventilgehäusefilms (3) überlappt, öffnet oder in engen Kontakt damit kommt; und
der Ventilgehäusefilm (3) an dem unteren Außenfilm (1b) befestigt ist, der eine untere Oberfläche des Ventilgehäusefilms (3) in einem abgedichteten Zustand auf einer stromaufwärtigen Seite des Ventilgehäusefilms (3) überlappt, und sich der Ventilgehäusefilm (3) zum Pufferabschnitt (b) auf der stromabwärtigen Seite des Ventilgehäusefilms (3) erstreckt, so dass der Ventilgehäusefilm (3) und der untere Außenfilm (1b), die sich auf der unteren Oberfläche des Ventilgehäusefilms (3) überlappen, dazwischen eine Fortsetzung des Pufferabschnitts (d) bereitstellen; und
der Ventilgehäusefilm (3) nicht in dem stromabwärtigen Ventilabschnitt (c) bereitgestellt ist;
ein Spitzenraum zwischen einem stromabwärtigen Ende des Ventilgehäusefilms (3) und einem stromabwärtigen Ende des oberen und unteren Außenfilms (1a, 1b) angeordnet ist; und
der Spitzenraum ein Raum ist, in dem der obere und untere Außenfilm (1a, 1b) direkt zueinander weisen, **dadurch gekennzeichnet, dass** der Spitzenraum einen Raum mit geringerer Geschlossenheit, der den Pufferabschnitt (b) bereitstellt, und einen Raum mit höherer Geschlossenheit einschließt, der auf einer stromabwärtigen Seite des Pufferabschnitts (b) positioniert ist und den stromabwärtigen Ventilabschnitt (c) bereitstellt;
wobei
mindestens einer von dem oberen und unteren Außenfilm (1a, 1b) einen kaum druckempfindlichen Haftabschnitt (4) in dem Pufferabschnitt (b) einschließt; und
der kaum druckempfindliche Haftabschnitt (4) einen Raum zwischen dem oberen und unteren Außenfilm (1a, 1b) in dem Pufferabschnitt (b) erzeugt, der weniger haftend ist als ein Raum zwischen dem oberen und unteren Außenfilm (1a, 1b) in dem stromaufwärtigen Ventilabschnitt (a) und dem stromabwärtigen Ventilabschnitt (c).

2. Schließventil (v) nach Anspruch 1, wobei die Geschlossenheit des Strömungsweges in dem stromaufwärtigen Ventilabschnitt (a) geringer ist als die Geschlossenheit des stromabwärtigen Ventilabschnitts (c).

3. Schließventil (v) nach Anspruch 1 oder 2, wobei eine Länge in einer Strömungsrichtung des Fluids in dem Strömungsweg in dem Pufferabschnitt (b) länger ist als eine Länge von mindestens einem von dem stromaufwärtigen Ventilabschnitt (a) und dem stromabwärtigen Ventilabschnitt (c).

4. Schließventil (v) nach einem der Ansprüche 1 bis 3, wobei eine Strömungswegbreite des Strömungsweges in dem stromabwärtigen Ventilabschnitt (c) enger ist als eine Strömungswegbreite in dem Pufferabschnitt (b) und eine Strömungswegbreite in dem stromaufwärtigen Ventilabschnitt (a).

5. Beutel (w), umfassend das Schließventil (v) nach einem der Ansprüche 1 bis 4.

6. Beutel (w) nach Anspruch 5, wobei das Schließventil (v) an Folien (w1, w2) befestigt ist, wobei die Folien einen Einschlussraum (w0) für den Beutel (w) bereitstellen, wobei:
das Rückschlagventil einen Befestigungsabschnitt (32), der an einem von dem oberen und dem unteren Film befestigt ist, und einen Laschenabschnitt einschließt, der sich von dem Befestigungsabschnitt (32) zum Auslassabschnitt (13) erstreckt; und
der Befestigungsabschnitt (32) in einer Strömungsrichtung der Vorwärtsströmung an einer Position gleich einer Druckunterschiedsposition oder stromabwärts in Bezug auf diese angeordnet ist, wobei die Druckunterschiedsposition durch einen abgedichteten Abschnitt (h) des Beutels (w) hindurchgeht, der eine Innenseite und eine Außenseite des Einschlussraums (w0) unterteilt, wobei der abgedichtete Abschnitt (h) durch miteinander Versiegeln der Folien (w1, w2) bereitgestellt wird, die den Beutel (w) bereitstellen.

## Revendications

1. Valve de fermeture (v) de forme flexible et sensiblement cylindrique, constituée d'une feuille, dans laquelle :
des films extérieurs supérieur et inférieur (1a, 1b) sont disposés sur le dessus et sur le dessous pour former l'extérieur de la valve (v), et les deux côtés (2) desdits films extérieurs (1a, 1b) sont solidarisés pour former des parties fermées, une extrémité servant de portion d'entrée (12) pour un écoulement dirigé vers l'avant, et l'autre extrémité servant de portion de sortie (13) pour ledit écoulement vers l'avant ; une voie d'écoulement pour ledit écoulement vers l'avant et un écoulement inverse, qui s'écoule dans le sens inverse de l'écoulement vers l'avant, étant prévue entre la portion d'entrée (12) et la portion de sortie (13) ; et la voie d'écoulement inclut une portion de valve qui limite le déplacement d'un fluide dans la voie d'écoulement ; dans laquelle
la portion de valve inclut une portion de valve amont (a), une portion de valve aval (c) et une portion tampon (b), la portion de valve aval étant positionnée en aval de la portion de valve amont (a) par rapport à un écoulement s'effectuant dans le sens de l'écoulement vers l'avant, et
la portion tampon (b) destinée à retenir un fluide dans la voie d'écoulement est prévue entre la portion de valve amont (a) et la portion de valve aval (c),
étant entendu que :
au moins la portion de valve amont (a) inclut, comme film formant corps de valve, au moins un film (3) assurant la fonction d'une valve antiretour qui, à l'usage, est ouverte à l'écoulement vers l'avant et fermée à l'écoulement inverse,
le film formant corps de valve (3), à l'usage, ouvre ou ferme la voie d'écoulement en s'ouvrant ou en venant en contact étroit avec le film extérieur supérieur qui chevauche une surface supérieure du film formant corps de valve (3), et
le film formant corps de valve (3) est fixé au film extérieur inférieur (1b) qui chevauche une surface inférieure du film formant corps de valve (3) en étant scellé sur un côté amont du film formant corps de valve (3), et le film formant corps de valve (3) s'étend jusqu'à la portion tampon (b) sur le côté aval du film formant corps de valve (3) de telle façon que le film formant corps de valve (3) et le film extérieur inférieur (1b) chevauchant la surface inférieure du film formant corps de valve (3) assurent entre eux un prolongement à la portion tampon (d), et
le film formant corps de valve (3) n'est pas présent dans la portion de valve aval (c),
un espace terminal est agencé entre une extrémité aval du film formant corps de valve (3) et une extrémité aval des films extérieurs supérieur et inférieur (1a, 1b), et
l'espace terminal est un espace dans lequel les films extérieurs supérieur et inférieur (1a, 1b) sont directement tournés l'un vers l'autre ; **caractérisé en ce que** l'espace terminal inclut un espace de fermeture inférieure assurant la fonction de portion tampon (b) et un espace de fermeture supérieure situé sur un côté aval de la portion tampon (b) et assurant la fonction de portion de valve aval (c) ;
dans laquelle :
au moins l'un des films extérieurs supérieur et inférieur (1a, 1b) inclut une portion adhésive peu sensible à la pression (4) dans la portion tampon (b), et
la portion d'adhérence peu sensible à la pression (4) crée un espace entre les films extérieurs supérieur et inférieur (1a, 1b) dans la portion tampon (b) qui est moins adhésif qu'un espace situé entre les films extérieurs supérieur et inférieur (1a, 1b) dans la portion de valve amont (a) et la portion de valve aval (c).

2. Valve de fermeture (v) selon la revendication 1, dans laquelle la fermeture de la voie d'écoulement dans la portion de valve amont (a) est inférieure à la fermeture de la portion de valve aval (c).

3. Valve de fermeture (v) selon la revendication 1 ou 2, dans laquelle la longueur, dans le sens de l'écoulement du fluide dans la voie d'écoulement de la portion tampon (b), est supérieure à la longueur d'au moins l'une quelconque de la portion de valve amont (a) et de la portion de valve aval (c).

4. Valve de fermeture (v) selon l'une quelconque des revendications 1 à 3, dans laquelle la largeur de la voie d'écoulement dans la portion de valve aval (c) est inférieure à celle de la voie d'écoulement dans la portion tampon (b) et à celle de la voie d'écoulement dans la portion de valve amont (a).

5. Sac (w) comprenant la valve de fermeture (v) selon l'une quelconque des revendications 1 à 4.

6. Sac (w) selon la revendication 5, la valve de fermeture (v) étant fixée à des feuilles (w1, w2), les feuilles assurant un espace de rétention (w0) pour le sac (w), dans lequel :
la valve antiretour inclut une portion de fixation (32) fixée à l'un des films extérieurs supérieur et inférieur et une portion de rabat qui s'étend à partir de la portion de fixation (32) vers la portion de sortie (13), et
la portion de fixation (32) est agencée, dans le sens de l'écoulement vers l'avant, au niveau d'une position correspondant à une position à différentiel de pression ou au niveau d'une position située en aval de celle-ci, la position à différentiel de pression étant située à travers une portion scellée (h) du sac (w) qui sépare l'intérieur de l'extérieur de l'espace de rétention (w0), la portion scellée (h) étant assurée par scellage mutuel des feuilles (w1, w2) qui constituent le sac (w).
